(19) Europäisches Patentamt
European Patent Office
Office européen des brevets

(11) EP 2 771 427 B1

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **12772992.9**

(22) Anmeldetag: **19.10.2012**

(51) Int Cl.:
***C09K 8/584*** *(2006.01)* ***C11D 1/06*** *(2006.01)*
***C11D 1/29*** *(2006.01)* ***C11D 1/34*** *(2006.01)*

(86) Internationale Anmeldenummer:
**PCT/EP2012/070730**

(87) Internationale Veröffentlichungsnummer:
**WO 2013/060623 (02.05.2013 Gazette 2013/18)**

(54) **VERFAHREN ZUR ERDÖLFÖRDERUNG UNTER VERWENDUNG VON TENSIDEN AUF BASIS EINES GEMISCHES VON C20-GUERBET-, C22-GUERBET-, C24-GUERBET-HALTIGEN KOHLENWASSERSTOFF-ALKOXYLATEN**

METHOD FOR PRODUCING MINERAL OIL USING SURFACTANTS BASED ON A MIXTURE OF C20-GUERBET-, C22-GUERBET-, C24-GUERBET-CONTAINING HYDROCARBON ALKOXYLATES

PROCÉDÉ D'EXTRACTION DE PÉTROLE À L'AIDE DE TENSIOACTIFS À BASE D'UN MÉLANGE D'ALCOXYLATES D'HYDROCARBURES CONTENANT UN GUERBET EN C32, UN GUERBET EN C34, UN GUERBET EN C36

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2011 EP 11186288**

(43) Veröffentlichungstag der Anmeldung:
**03.09.2014 Patentblatt 2014/36**

(73) Patentinhaber: **BASF SE**
**67056 Ludwigshafen am Rhein (DE)**

(72) Erfinder:
- **BITTNER, Christian**
  **64625 Bensheim (DE)**
- **OETTER, Günter**
  **67227 Frankenthal (DE)**
- **TINSLEY, Jack**
  **Houston , TX 77084 (US)**
- **SPINDLER, Christian**
  **Houston , TX 77062 (US)**
- **ALVAREZ JÜRGENSON , Gabriela**
  **68185 Mannheim (DE)**
- **MAITROVOGEL ,Sohie**
  **68199 Mannheim (DE)**

(74) Vertreter: **BASF IP Association**
**BASF SE**
**ZRX-C6**
**67056 Ludwigshafen (DE)**

(56) Entgegenhaltungen:
**WO-A1-2011/110503 WO-A1-2011/130310**
**WO-A1-2011/131549 US-B1- 7 119 125**

- **CHUNHEE K SUNWOOA & WILLIAM H WADEA: "Optimal Surfactant Structures for Cosurfactant-Free Microemulston Systems I. C16 and C14 Guerbet Alcohol Hydrophobes", JOURNAL OF DISPERSION SCIENCE AND TECHNOLOGY, TAYLOR AND FRANCIS GROUP, NEW YORK, NY, US, Bd. 13, Nr. 5, 1. Januar 1992 (1992-01-01) , Seiten 491-514, XP008160557, ISSN: 0193-2691, DOI: 10.1080/01932699208943330**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 771 427 B1

- **"Products for Enhanced Oil Recovery", Huntsman: Technical Bulletin, 1. Januar 2010 (2010-01-01), Seiten 1-4, XP55056826, Gefunden im Internet: URL:www.huntsman.com/portal/page/portal/corporate/Media%20Library/a_MC4EE584E6EFA727 3E040EBCD2C6B19E9/Innovation_MC4EE584E960B 7273E040EBCD2C6B19E9/Enhanced%20oil%20reco ver_MC4EE584E96587273E040EBCD2C6B19E9/file s/enhancedoilrecovery_0.pdf [gefunden am 2013-03-18]**

## Beschreibung

Die vorliegende Erfindung betrifft eine Tensidmischung, deren Verwendung und Herstellung sowie wässrige Tensidformulierungen die Mischungen enthaltend und Verfahren zur Erdölförderung mittels Winsor Typ III Mikroemulsionsflutens, bei dem die wässrige Tensidformulierung durch Injektionsbohrungen in eine Erdöllagerstätte einpresst und der Lagerstätte durch Produktionsbohrungen Rohöl entnommen wird.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur etwa 1 μm aufweisen. Neben Erdöl, inklusive Anteilen von Erdgas, enthält eine Lagerstätte mehr oder weniger stark salzhaltiges Wasser.

Bei der Erdölförderung unterscheidet man allgemein zwischen der primären, sekundären und tertiären Förderung. Bei der primären Förderung strömt das Erdöl nach dem Anbohren der Lagerstätte aufgrund des Eigendrucks der Lagerstätte von selbst durch das Bohrloch an die Oberfläche.

Nach der primären Förderung kommt daher die sekundäre Förderung zum Einsatz. Bei der sekundären Förderung werden zusätzlich zu den Bohrlöchern, welche der Förderung des Erdöls dienen, den so genannten Produktionsbohrungen, weitere Bohrlöcher in die erdölführende Formation gebohrt. Durch diese so genannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in die Formation langsam von der Injektionsbohrung ausgehend in Richtung der Pröduktionsbohrung gedrückt. Dies funktioniert aber nur so lange, wie die Hohlräume vollständig mit Öl gefüllt sind und das viskosere Öl durch das Wasser vor sich her geschoben wird. Sobald das dünnflüssige Wasser durch Hohlräume durchbricht, strömt es ab diesem Zeitpunkt auf dem Weg des geringsten Widerstands, also durch den gebildeten Kanal, und schiebt nicht mehr das Öl vor sich her.

Mittels primärer und sekundärer Förderung sind im Regelfall nur ca. 30 bis 35% der in der Lagerstätte vorhandenen Erdölmenge zu fördern.

Es ist bekannt, die Erdölausbeute durch Maßnahmen der tertiären Ölförderung weiter zu steigern. Eine Übersicht zur tertiären Ölförderung befindet sich beispielsweise im "Journal of Petroleum Science of Engineering 19 (1998)", Seite 265 bis 280. Zur tertiären Ölförderung gehören Wärmeverfahren, bei denen Heißwasser oder Heißdampf in die Lagerstätte eingepresst wird. Hierdurch wird die Viskosität des Öls herabgesetzt. Als Flutmedium können ebenfalls Gase wie $CO_2$ oder Stickstoff Einsatz finden.

Zur tertiären Erdölförderung gehören weiterhin Verfahren bei denen man geeignete Chemikalien als Hilfsmittel zur Ölförderung einsetzt. Mit diesen lässt sich die Situation gegen Ende des Wasserflutens beeinflussen und dadurch auch bis dahin in der Gesteinsformation festgehaltenes Erdöl fördern.

Auf das Erdöl, welches gegen Ende der sekundären Förderung in den Poren des Lagerstättengesteins gefangen ist, wirken viskose und kapillare Kräfte, wobei das Verhältnis dieser beiden Kräfte zueinander die mikroskopische Ölentfernung bestimmt. Mittels eines dimensionslosen Parameters, der so genannten Kapillarzahl, wird das Einwirken dieser Kräfte beschrieben. Sie ist das Verhältnis der Viskositätskräfte (Geschwindigkeit x Viskosität der drückenden Phase) zu den Kapillarkräften (Grenzflächenspannung zwischen Öl und Wasser x Benetzung des Gesteins):

$$N_c = \frac{\mu\nu}{\sigma \cos\theta}.$$

Dabei bedeutet μ die Viskosität des Erdöl mobilisierenden Fluids, ν die Darcy-Geschwindigkeit (Durchfluss pro Flächeneinheit), σ die Grenzflächenspannung zwischen Erdöl mobilisierender Flüssigkeit und Erdöl und θ der Kontaktwinkel zwischen Erdöl und dem Gestein (C. Melrose, C.F. Brandner, J. Canadian Petr. Techn. 58, Oct. - Dez., 1974). Je höher die Kapillarzahl, desto größer die Mobilisierung des Öls und somit auch der Entölungsgrad.

Es ist bekannt, dass die Kapillarzahl gegen Ende der sekundären Erdölförderung im Bereich von etwa $10^{-6}$ liegt und dass es notwendig ist, die Kapillarzahl auf etwa $10^{-3}$ bis $10^{-2}$ zu erhöhen, um zusätzliches Erdöl mobilisieren zu können.

Hierzu kann man eine besondere Form des Flutverfahrens - das sogenannte Winsor Typ III Mikroemulsionsfluten - durchführen. Beim Winsor Typ III Mikroemulsionsfluten sollen die injizierten Tenside mit der in der Lagerstätte vorhandenen Wasser- und der Ölphase eine Mikroemulsion Windsor Typ III ausbilden. Bei einer Mikremulsion Windsor Typ III handelt es sich nicht um eine Emulsion mit besonders kleinen Tröpfchen, sondern um eine thermodynamisch stabile, flüssige Mischung von Wasser, Öl und Tensiden. Ihre drei Vorteile sind, dass

- dadurch eine sehr niedrige Grenzflächenspannung σ zwischen Erdöl und wässriger Phase erreicht wird,
- sie in der Regel eine sehr niedrige Viskosität aufweist und dadurch nicht in einer porösen Matrix gefangen wird,

- sie schon bei kleinsten Energieeinträgen entsteht und über einen unendlich langen Zeitraum stabil bleiben kann (klassische Emulsionen benötigen hingegen höhere Scherkräfte, welche im Reservoir überwiegend nicht auftauchen, und sind nur kinetisch stabilisiert).

Die Mikroemulsion Winsor-Typ III steht mit überschüssigem Wasser und überschüssigem Öl im Gleichgewicht. Unter diesen Bedingungen der Mikroemulsionsausbildung belegen die Tenside die Öl-Wasser-Grenzfläche und erniedrigen die Grenzflächenspannung $\sigma$ besonders bevorzugt auf Werte von < $10^{-2}$ mN/m (ultralow interfacial tension). Um ein optimales Ergebnis zu erzielen, sollte der Anteil der Mikroemulsion im System Wasser-Mikroemulsion-Öl bei definierter Tensidmenge naturgemäß möglichst groß sein, da dadurch umso niedrigere Grenzflächenspannungen erzielt werden können.

Auf diese Art und Weise lassen sich die Öltröpfchen in ihrer Form verändern (Grenzflächenspannung zwischen Öl und Wasser ist soweit abgesenkt, dass nicht mehr der Zustand der kleinsten Grenzfläche angestrebt wird und nicht mehr die Kugelform bevorzugt ist) und durch das Flutwasser durch die Kapillaröffnungen hindurchzwängen.

Sind alle Öl-Wasser-Grenzflächen mit Tensid belegt, bildet sich beim Vorliegen von überschüssiger Tensidmenge die Mikroemulsion Winsor Typ III aus. Sie stellt somit ein Reservoir für Tenside dar, welche eine sehr niedrige Grenzflächenspannung zwischen Öl- und Wasserphase bewerkstelligen. Dadurch dass die Mikroemulsion Winsor Typ III niederviskos ist, wandert sie im Flutprozess mit durch das poröse Lagerstättengestein (Emulsionen hingegen können in der porösen Matrix hängen bleiben und Lagerstätten verstopfen). Trifft die Mikroemulsion Winsor Typ III auf eine noch nicht mit Tensid bedeckte Öl-Wasser-Grenzfläche, so kann das Tensid aus der Mikroemulsion die Grenzflächenspannung dieser neuen Grenzfläche deutlich herabsetzen und zu einer Mobilisierung des Öles (zum Beispiel per Verformung der Öltropfen) führen.

Die Öltröpfchen können sich anschließend zu einer kontinuierlichen Ölbank vereinigen. Dies hat zweierlei Vorteile:

Zum einen können beim Voranschreiten der kontinuierlichen Ölbank durch neues poröses Gestein die sich dort befindlichen Öltröpfchen mit der Bank verschmelzen. Weiterhin wird durch die Vereinigung der Öltropfen zu einer Ölbank die Öl-Wasser-Grenzfläche deutlich verringert und somit nicht mehr benötigtes Tensid wieder freigesetzt. Das freigesetzte Tensid kann danach wie oben beschrieben in der Formation verbliebene Öltropfen mobilisieren.

Beim Winsor Typ III Mikroemulsionsfluten handelt es sich folglich um ein äußerst effizientes Verfahren und im Unterschied zu einem Emulsionsflutverfahren bedarf es deutlich weniger Tensid. Beim Mikroemulsionfluten werden üblicherweise die Tenside wahlweise zusammen mit Cosolventien und/oder basischen Salzen (optional in Gegenwart von Chelatbildnern) injiziert. Nachfolgend wird eine Lösung aus verdickendem Polymer zur Mobilitätskontrolle injiziert. Eine weitere Variante ist die Injektion einer Mischung aus verdickendem Polymer sowie Tensiden, Cosolventien und/oder basischen Salzen (optional mit Chelatbildner) und nachfolgend eine Lösung aus verdickendem Polymer zur Mobilitätskontrolle. Diese Lösungen sollten in der Regel klar sein, um Verstopfungen des Reservoirs zu vermeiden.

Die Anforderungen an Tenside für die tertiäre Erdölförderung unterscheiden sich deutlich von Anforderungen an Tenside für andere Anwendungen: Geeignete Tenside für die tertiäre Ölförderung sollen die Grenzflächenspannung zwischen Wasser und Öl (üblicherweise ca. 20 mN/m) auf besonders niedrige Werte von weniger als $10^{-2}$ mN/m reduzieren, um eine ausreichende Mobilisierung des Erdöls zu ermöglichen. Dies muss bei den üblichen Lagerstättentemperaturen von ca. 15°C bis 130°C und in Gegenwart von stark salzhaltigem Wasser, insbesondere auch in Gegenwart von hohen Anteilen von Kalzium- und/oder Magnesiumionen erfolgen; die Tenside müssen also auch in stark salzhaltigem Lagerstättenwasser löslich sein.

Zum Erfüllen dieser Anforderungen sind bereits häufig Mischungen von Tensiden vorgeschlagen worden, insbesondere Mischungen aus anionischen und nicht ionischen Tensiden.

US 7,119,125 B1 beschreibt eine Mischung von sulfatiertem Guerbet-Alkoholalköxylat und von niedermolekularem sulfatiertem Alkylalkoxylat in der Ölförderung. Der bimodalen Verteilung werden besonders gute Emulgiereigenschaften zugewiesen. Diese Emulgiereigenschaften spielen jedoch im Mikroemulsionsfluten nach Winsor Typ III keine große Rolle. Man würde zuviel Tensid für die Emulgierung von Öl benötigen und die benötigten Scherrkräfte liegen im Flutprozess kaum vor (abgesehen vom Bereich rund um den Injektor).

US-A 2008/217064 beschreibt eine Bohrspüllösung enthaltend ein nichtionisches Tensid - bestehend aus wenigstens einem verzweigten Alkylethoxylat und einem Endgruppen-verschlossenen Alkylethoxylat - sowie einem Waschmittelbuilder und einem Verdicker. Das nichtionische Tensid kann dabei ein C10-Guerbet-alkoholethoxylat sein.

US-A 2009/270281 beschreibt die Verwendung einer Tensidmischung für die Erdölförderung, welche mindestens ein Tensid mit einem Alkylrest von 12 bis 30 Kohlenstoffatomen und ein verzweigtes Cotensid mit einem Alkylrest von 6 bis 11 Kohlenstoffatomen enthält. Der Verzweigungsgrad des Alkylrestes im Cotensid reicht von 1 bis 2.5 und kann damit Guerbetalkohole des Typus 2-Ethylhexyl beziehungsweise 2-Propylheptyl umfassen. Die Cotenside können Alkoholethoxylate oder anionischmodifizierte Alkoholethoxylate (zum Beispiel Alkylethersulfat) sein.

Weitere Tensidmischungen sind in WO 2011/037975 A2, WO2011/110501 A1, WO 2011/110502 A1, WO2011/110503 A1 und in den internationalen Anmeldungen mit den Anmeldenummern PCT/EP2011/055884 sowie PCT/EP2011/056325 beschrieben.

Die Einsatzparameter wie beispielsweise Art, Konzentration und das Mischungsverhältnis der eingesetzten Tenside zueinander werden daher vom Fachmann an die in einer gegebenen Ölformation vorherrschenden Bedingungen (beispielsweise Temperatur und Salzgehalt) angepasst.

Wie vorstehend beschrieben ist die Erdölproduktion proportional zur Kapillarzahl. Diese ist umso höher je niedriger die Grenzflächenspannung zwischen Öl und Wasser ist. Niedrige Grenzflächenspannungen sind umso schwieriger zu erreichen je höher die mittlere Anzahl an Kohlenstoffatomen im Rohöl ist. Für niedrige Grenzflächenspannungen sind Tenside geeignet, welche über einen langen Alkylrest verfügen. Je länger der Alkylrest ist, desto besser lassen sich die Grenzflächenspannungen reduzieren. Jedoch ist die Verfügbarkeit solcher Verbindungen sehr eingeschränkt.

Eine Aufgabe der vorliegenden Erfindung ist es daher, ein besonders effizientes Tensid beziehungsweise eine effiziente Tensidmischung für den Einsatz zum Tensidfluten, sowie ein verbessertes Verfahren zur tertiären Erdölförderung bereitzustellen. Ferner ist es Aufgabe der Erfindung ein Verfahren zur Herstellung dieser Tenside beziehungsweise Tensidmischung zur Verfügung zu stellen.

Die Aufgabe wird gelöst durch eine Tensidmischung enthaltend bezüglich des Kohlenwasserstoffteils $(R^1)(R^2)$-CH-$CH_2$- mindestens drei verschiedene ionische Tenside der allgemeinen Formel (I)

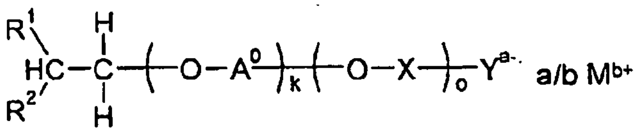 (I)

,

wobei

$R^1$ für einen linearen, gesättigten oder ungesättigten aliphatischen Kohlenwasserstoffrest mit 8 oder 10 Kohlenstoffatomen steht;

$R^2$ für einen linearen, gesättigten oder ungesättigten aliphatischen Kohlenwasserstoffrest mit 10 oder 12 Kohlenstoffatomen steht, wobei die Reste $R^1$ und $R^2$ derart gewählt sind, dass die mindestens 3 ionischen Tenside der allgemeinen Formel (I) einen Kohlenwasserstoffrest $(R^1)(R^2)CHCH_2$- mit 20 Kohlenstoffatomen, 22 Kohlenstoffatomen und 24 Kohlenstoffatomen ergeben; wobei das $C_{20}$-Tensid der allgemeinen Formel (I) in einem Bereich von 10 % bis 30 %, das $C_{22}$-Tensid der allgemeinen Formel (I) in einem Bereich von 5 % bis 25 % und das $C_{24}$-Tensid der allgemeinen Formel (I) in einem Bereich von 55 % bis 85 %, bezogen auf die molare Summe der drei Tenside, vorliegt;

jedes $A^0$ unabhängig für Ethylen, Propylen (vorzugsweise 1,2-Propylen) oder Butylen (vorzugsweise 1,2-Butylen);

k für eine ganze Zahl von 1 bis 99,

X für eine verzweigte oder unverzweigte Alkylengruppe mit 1 bis 10 Kohlenstoffatomen, die mit einer OH-Gruppe substituiert sein kann;

o für 0 oder 1;

$M^{b+}$ für ein Kation;

$Y^{a-}$ für eine Sulfatgruppe, Sulfonatgruppe, Carboxylatgruppe oder eine Phosphatgruppe (vorzugsweise eine Sulfat- oder Carboxylatgruppe, weiterbevorzugt eine Sulfatgruppe);

b für 1, 2 oder 3 (vorzugsweise 1) und

a für 1 oder 2 (vorzugsweise 1) steht.

Ein weiterer Aspekt der vorliegenden Erfindung betrifft eine wässrige Tensidformulierung enthaltend eine erfindungsgemäße Tensidmischung, wobei vorzugsweise die Tensidformulierung einen Gesamt-Tensidanteil von 0,05 bis 5 Gew.-% bezüglich der Gesamtmenge der wässrigen Tensidformulierung aufweist.

Ein weiterer Aspekt der vorliegenden Erfindung betrifft die Verwendung einer erfindungsgemäßen Tensidmischung oder einer erfindungsgemäßen Tensidformulierung bei der Erdölförderung, mittels Winsor Typ III Mikroemulsionsflutens.

Ein weiterer Aspekt der vorliegenden Erfindung betrifft Verfahren zur Erdölförderung, mittels Winsor Typ III Mikroemulsionsflutens, bei dem eine erfindungsgemäße wässrige Tensidformulierung zwecks Erniedrigung der Grenzflächenspannung zwischen Öl und Wasser auf < 0,1 mN/m, durch mindestens eine Injektionsbohrung in eine Erdöllagerstätte eingepresst und der Lagerstätte durch mindestens eine Produktionsbohrung Rohöl entnommen wird.

Dementsprechend wird eine Mischung aus bezüglich des Kohlenwasserstoffteils $(R^1)(R^2)$-CH-$CH_2$- mindestens 3 verschiedenen ionischen Tensiden, sowie ein Verfahren zur tertiären Erdölförderung mittels Winsor Typ III Mikroemulsionsflutens bereitgestellt, bei dem eine wässrige Tensidformulierung umfassend bezüglich des Kohlenwasserstoffteils $(R^1)(R^2)$-CH-$CH_2$- mindestens drei verschiedene ionische Tenside durch mindestens eine Injektionsbohrung in eine Erdöllagerstätte eingepresst wird, die Grenzflächenspannung zwischen Öl und Wasser auf Werte < 0,1 mN/m, bevorzugt auf Werte < 0,05 mN/m, besonders bevorzugt auf Werte < 0,01 mN/m abgesenkt wird, und der Lagerstätte durch mindestens eine Produktionsbohrung Rohöl entnommen wird.

In einer Ausführung stehen $R^1$ für einen linearen, gesättigten oder ungesättigten (bevorzugt gesättigten) aliphatischen Kohlenwasserstöffrest mit 8 oder 10 Kohlenstoffatomen und $R^2$ für einen linearen, gesättigten oder ungesättigten (bevorzugt gesättigten) aliphatischen Kohlenwasserstoffrest mit 10 oder 12 Kohlenstoffatomen, und wobei insbesondere dadurch mindestens 3 ionische Tenside der allgemeinen Formel (I) mit einem Kohlenwasserstoffrest mit 20 Kohlenstoffatomen, 22 Kohlenstoffatomen und 24 Kohlenstoffatomen vorliegen. Bildet man die molare Summe aus diesen drei Tensiden, so liegt das $C_{20}$-Tensid der allgemeinen Formel (I) in einem Bereich von 10% bis 30%, das $C_{22}$-Tensid der allgemeinen Formel (I) in einem Bereich von 5% bis 25% und das $C_{24}$-Tensid der allgemeinen Formel (I) in einem Bereich von 55% bis 85% bezogen auf die Summe vor. Weiterhin ist bevorzugt, dass der Gewichtsanteil der 3 ionischen Tenside bezogen auf das Gesamtgewicht der erfindungsgemäßen Tensidmischung größer 50 Gew.-%, mehr bevorzugt größer 60 Gew.-%, weiter mehr bevorzugt größer 70 Gew.-%, weiter mehr bevorzugt größer 80 Gew.-%, weiter bevorzugt größer 90 Gew.-% beträgt.

Vorzugsweise ist k eine ganze Zahl im Bereich von 4 bis 50.

Vorzugsweise steht in Formel (I) der Rest $(OX)_oY^{a-}$ für $OS(O)_2O^-$, $OCH_2CH_2S(O)_2O^-$, $OCH_2CH(OH)CH_2S(O)_2O^-$, $O(CH_2)_3S(O)_2O^-$, $S(O)_2O^-$, $CH_2C(O)O^-$ oder für $CH_2CH(R')C(O)O^-$, wobei R' Wasserstoff oder ein Alkylrest mit 1 bis 4 C-Atomen (beispielsweise Methyl) ist.

Die Alkylenoxy (AO)-gruppen $OA^0$ in Formel (I), welche k-fach auftreten, können gleich oder verschieden sein. Sofern diese verschieden sind, können diese statistisch verteilt, alternierend oder blockweise, d.h. in zwei, drei vier oder mehrerer Blöcke angeordnet sein.

Dementsprechend kann in Formel (I) $(OA)_k$ für n Butylen (BuO)-, m Propylen (PO)- und l Ethylenoxy (EO)-gruppen stehen, wobei n, m, l natürliche Zahlen einschließlich 0 sind und es gilt: n+m+l=k.

Vorzugsweise sind die n Butylen-, m Propylen- und l Ethylenoxygruppen zumindest teilweise (vorzugsweise zahlenmäßig zu mindestens 50 %, mehr bevorzugt zu mindestens 60%, weiter mehr bevorzugt zu mindestens 70%, mehr bevorzugt zu mindestens 80%, mehr bevorzugt zu mindestens 90%, insbesondere vollständig) blockweise angeordnet.

Blockweise angeordnet bedeutet im Rahmen der vorliegenden Erfindung, dass mindestens ein AO eine Nachbargruppe AO aufweist, die chemisch identisch ist, so dass diese mindestens zwei AO einen Block bilden.

Vorzugsweise tritt anschließend an den Rest $(R^1)(R^2)$-CH-$CH_2$- in Formel (I) für $(OA)_k$ ein Butylenoxyblock mit n Butylenoxygruppen, gefolgt von einem Propylenoxyblock mit m Propylenoxygruppen und abschließend ein Ethylenoxyblock mit l Ethylenoxygruppen auf.

Vorzugsweise steht m für eine ganze Zahl von 4 bis 15 (mehr bevorzugt 5 bis 9) und/oder l für eine ganze Zahl von 0 bis 25 (mehr bevorzugt 4 bis 15) und/oder n für eine ganze Zahl von 2 bis 15 (mehr bevorzugt 5 bis 9).

Gemäß einer weiter bevorzugten Ausführungsform betrifft die Erfindung eine Mischung aus bezüglich des Kohlenwasserstoffteils $(R^1)(R^2)$-CH-$CH_2$- drei ionischen Tensiden sowie deren Verwendung, wobei m für eine Zahl von 4 bis 15 steht, n für eine Zahl von 0 bis 15 steht und $Y^{a-}$ ausgewählt ist aus der Gruppe von Sulfatgruppen, Sulfonatgruppen und Carboxylatgruppen, wobei die Gruppen BuO, PO und EO zu mehr als 80% in Blockform in der Reihenfolge BuO, PO, EO beginnend von $(R^1)(R^2)$-CH-$CH_2$, vorliegen und die Summe l + m + n im Bereich von 5 bis 49 liegt.

Eine besonders bevorzugte Ausführung ist dabei, wenn n für eine Zahl von 2 bis 15 steht, m für eine Zahl von 5 bis 9 steht, und $Y^{a-}$ ausgewählt ist aus der Gruppe von Sulfatgruppen, Sulfonatgruppen und Carboxylatgruppen, wobei die Gruppen A und B zu mehr als 80% in Blockform in der Reihenfolge BuO, PO und EO beginnend von $(R^1)(R^2)$-CH-$CH_2$, vorliegen, die Summe l + m + n im Bereich von 4 bis 50 liegt und der Block BuO zu mehr als 80% aus 1,2-Butylenoxid besteht.

Eine bevorzugte erfindungsgemäße Tensidmischung enthält weiterhin Tenside der Formel

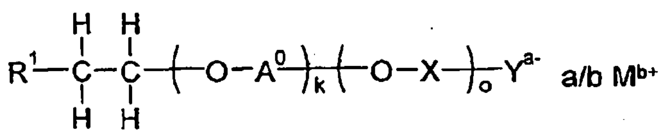 (II)

und der Formel

$$R^2\!-\!\left(O-A^0\right)_k\!\left(O-X\right)_o\!-Y^{a-}\quad a/b\ M^{b+}\qquad (III)$$

wobei

$R^1$ für einen linearen oder verzweigten, gesättigten oder ungesättigten aliphatischen Kohlenwasserstoffrest mit 8 bis 10 Kohlenstoffatomen steht,
$R^2$ für einen linearen oder verzweigten, gesättigten oder ungesättigten aliphatischen Kohlenwasserstoffrest mit 10 bis 12 Kohlenstoffatomen steht, und
$A^0$, X, $Y^{a-}$, $M^{b+}$, k, o, a und b die für Formel (I) angegebene Bedeutung besitzen.

Vorzugsweise liegt der Anteil an Tensiden der Formel (I) in Bezug auf die Summe der Mengen an Tensiden der Formeln (I), (II) und (III) im Bereich von 80 Gew.-% bis 99 Gew.-%.

Gemäß einer besonders bevorzugten Ausführungsform der Erfindung bedeutet in der allgemeinen Formel (II) $R^1$ einen linearen, gesättigten aliphatischen Kohlenwasserstoffrest mit 8 oder 10 Kohlenstoffatomen und in der allgemeinen Formel (III) $R^2$ einen linearen, gesättigten aliphatischen Kohlenwasserstoffrest mit 10 oder 12 Kohlenstoffatomen.

Bei dem wie vorstehend beschriebenen, erfindungsgemäßen Verfahren zur Erdölförderung mittels Winsor Typ III Mikroemulsionsflutens wird eine wässrige Tensidformulierung eingesetzt, die bezüglich des Kohlenwasserstoffteils $(R^1)(R^2)$-CH-$CH_2$- mindestens drei verschiedene Tenside der allgemeinen Formel (I) enthält. Sie kann darüber hinaus noch weitere Tenside und/oder andere Komponenten umfassen.

Im Rahmen des erfindungsgemäßen Verfahrens zur tertiären Erdölförderung mittels Winsor Typ III Mikroemulsionsflutens, wird durch die Verwendung der erfindungsgemäßen Tensidmischung die Grenzflächenspannung zwischen Öl und Wasser auf Werte < 0,1 mN/m, bevorzugt auf < 0,05 mN/m, besonders bevorzugt auf < 0,01 mN/m abgesenkt. Somit wird die Grenzflächenspannung zwischen Öl und Wasser auf Werte im Bereich von 0,1 mN/m bis 0,0001 mN/m, bevorzugt auf Werte im Bereich von 0,05 mN/m bis 0,0001 mN/m, besonders bevorzugt auf Werte im Bereich von 0,01 mN/m bis 0,0001 mN/m abgesenkt.

Die bezüglich des Kohlenwasserstoffteils $(R^1)(R^2)$-CH-$CH_2$- verschiedenen drei Tenside lassen sich unter der allgemeinen Formel (I) subsumieren. Der Unterschied kann sich durch die Zahl der Kohlenstoffatome, der Zahl der ungesättigten Bindungen, der Verzweigungshäufigkeit und/oder des Verzweigungsgrades ergeben. Insbesondere unterscheiden sich die Tenside in der Kettenlänge, welche für $R^1$ und $R^2$ gegeben ist Beispielhaft seien $R^1/R^2$ Kohlenwasserstoffketten mit 8/10, 8/12, 9/11, 10/10, 10/12, bevorzugt 8/10, 8/12, 10/10, 10/12 Kohlenstoffatomen. Es können in der Tensidformulierung - herstellungsbedingt - auch mehr als drei verschiedene Tenside der allgemeinen Formel vorhanden sein. Vorzugsweise bilden die drei Tenside mit bezüglich des Kohlenwasserstoffteils $(R^1)(R^2)$-CH-$CH_2$- mit 20, 22 und 24 Kohlenstoffatomen, die Hauptkomponenten des erfindungsgemäßen Tensidgemisches. Ihr Anteil liegt dabei vorzugsweise bei mindestens 25 Gew.-% bezogen auf das Gesamtgewicht des Tensidgemisches, mehr bevorzugt bei mindestens 30 Gew.-%, mehr bevorzugt bei mindestens 40 Gew.-%, mehr bevorzugt bei mindestens 50 Gew.-%.

Bei dem Rest $R^1$ handelt es sich um einen linearen, gesättigten oder ungesättigten aliphatischen Kohlenwasserstoffrest mit 8 bis 10 Kohlenstoffatomen. Bei dem Rest $R^2$ handelt es sich um einen linearen, gesättigten oder ungesättigten aliphatischen Kochlenwasserstoffrest mit 10 bis 12 Kohlenstoffatomen. $R^1$ ist entweder identisch mit $R^2$ oder weist vorzugsweise maximal zwei C-Atome (mehr bevorzugt genau zwei C-Atome) weniger als $R^2$ auf.

Der Begriff "Verzweigungsgrad" wird in prinzipiell bekannter Art und Weise als die Zahl der Methylgruppen in einem Molekül des Alkohols abzüglich 1 definiert. Der mittlere Verzweigungsgrad ist der statistische Mittelwert der Verzweigungsgrade aller Moleküle in einer Probe.

Eine Ausführung ist die Verwendung von linearen gesättigten oder ungesättigten Resten $R^1$ mit 8 oder 10 Kohlenstoffatomen beziehungsweise $R^2$ mit 10 oder 12 Kohlenstoffatomen. Bevorzugt ist die Verwendung von linearen gesättigten Resten $R^1$ beziehungsweise $R^2$. Dadurch ergibt sich für den aliphatischen Kohlenwasserstoffrest $(R^1)(R^2)$-$CHCH_2$ ein Verzweigungsgrad von 1.

In der oben definierten allgemeinen Formel stehen I, m und n für natürliche Zahlen einschließlich 0, also für 0, 1, 2'usw. Für den Fachmann auf dem Gebiet der Polyalkoxylate ist jedoch klar, dass es sich bei dieser Definition um die Definition jeweils eines einzelnen Tensids handelt. Im Falle des Vorliegens von Tensidmischungen beziehungsweise Tensidformulierungen, die mehrere Tenside der allgemeinen Formel umfassen, handelt es sich bei den Zahlen I und m um Mittelwerte über alle Moleküle der Tenside, da bei der Alkoxylierung von Alkohol mit Ethylenoxid beziehungsweise Propylenoxid beziehungsweise Butylenoxid jeweils eine gewisse Verteilung von Kettenlängen erhalten wird. Diese Verteilung kann in prinzipiell bekannter Art und Weise durch die sogenannte Polydispersität D beschrieben werden. Bei D = $M_w/M_n$. handelt es sich um den Quotienten aus dem Gewichtsmittel der molaren Masse und dem Zahlenmittel der molaren Masse. Die Polydispersität kann mittels der dem Fachmann bekannten Methoden ermittelt werden, beispielsweise mittels Gelpermeations-Chromatographie.

Vorzugsweise steht l für eine Zahl von 0 bis 99, bevorzugt 1 bis 40, besonders bevorzugt 1 bis 20.

Vorzugsweise steht m für eine Zahl von 0 bis 99, bevorzugt 1 bis 20, besonders bevorzugt 4 bis 15.

Vorzugsweise steht n für eine Zahl von 0 bis 99, bevorzugt 1 bis 20, besonders bevorzugt 2 bis 15.

Gemäß der Erfindung ist die Summe l $\pm$ m + n (=k) eine Zahl, die im Bereich von 1 bis 99, bevorzugt im Bereich von 5 bis 50, besonders bevorzugt im Bereich von 8 bis 39, liegt.

In Formel (I) steht X für eine verzweigte oder unverzweigte Alkylengruppe mit 1 bis 10, bevorzugt 2 bis 4 Kohlenstoffatomen, die mit einer OH-Gruppe substituiert sein kann. Bevorzugt handelt es sich bei der Alkylengruppe um eine Methylen-, Ethylen- oder Propylengruppe. Insbesondere ist für X bevorzugt $CH_2CH_2$, $CH_2CH(OH)CH_2$, $(CH_2)_3$, $CH_2$ oder $CH_2CH(R')$, wobei R' Wasserstoff oder ein Alkylrest mit 1 bis 4C-Atomen (beispielsweise Methyl) ist. X kann vorhanden sein (o = 1) oder fehlen (o = 0).

In obiger allgemeiner Formel steht $Y^{a-}$ für eine Sulfonat-, Sulfat-, Carboxylatgruppe oder Phosphatgruppe (bevorzugt Sulfonat-, Sulfat- oder Carboxylatgruppe, insbesondere Sulfat- und Carboxylat). Somit kann a für Werte 1 oder 2 stehen.

In obiger Formel steht $M^+$ für ein Kation, bevorzugt für ein Kation ausgewählt aus der Gruppe $Na^+$; $K^+$, $Li^+$, $NH_4^+$, $H^+$, $Mg^{2+}$ und $Ca^{2+}$ (bevorzugt $Na^+$, $K^+$ oder $NH_4^*$). Insgesamt kann b für Werte 1, 2 oder 3 stehen.

Die Alkohole $(R^1)(R^2)$-CH-$CH_2$-OH, die als Ausgangsverbindung zur Herstellung der erfindungsgemäßen Tenside dienen können, sind beispielsweise durch die Dimerisierung von Alkoholen des Typus $R^1CH_2CH_2OH$ und $R^2OH$ unter Abspaltung von Wasser zugänglich.

Demgemäß ist ein weiterer Aspekt der vorliegenden Erfindung ein Verfahren zur Herstellung einer erfindungsgemäßen Tensidmischung enthaltend die Schritte:

(a) Herstellung von Guerbetalkoholen der allgemeinen Formel (IV) $(R^1)(R^2)$-CH-$CH_2$OH (IV), wobei $R^1$ und $R^2$ die in Bezug auf Formel (I) angegebene Bedeutung aufweisen, durch Kondensation einer Mischung mindestens zweier primärer Alkohole der Formel R-$CH_2$-$CH_2$-OH, wobei R für einen linearen oder verzweigten, gesättigten oder ungesättigten aliphatischen Kohlenwasserstoffrest mit 8 bis 10 Kohlenstoffatomen steht,

(b) Alkoxylierung der in Verfahrensschritt (a) erhaltenen Alkohole,

(c) Umsetzung der in Schritt (b) erhaltenen Alkoholalkoxylate mit einer Gruppe $Y^{a-}$, gegebenenfalls unter Ausbildung einer Spacergruppe OX.

Die Herstellung des Guerbetalkohols der allgemeinen Formel (IV) $(R^1)(R^2)$-CH-$CH_2$OH in Verfahrensschritt (a) ist dem Fachmann bekannt.

Im Zuge der Guerbetreaktion werden letztlich primäre Alkohole zu $\beta$-verzweigten primären Alkoholen in Gegenwart geeigneter Katalysatoren dimerisiert. Dabei bilden sich primär aus dem Alkohol Aldehyde, welche anschließend durch Aldolkondensation unter Eliminierung von Wasser und nachfolgender Hydrierung zu gesättigten Alkoholen dimerisieren. Neben dem Hauptprodukt, dem Guerbetalkohol, können auch verschiedene Nebenprodukte entstehen, beispielsweise ungesättigte $\beta$-verzweigte primäre Alkohole falls die Hydrierung der Doppelbindung nicht vollständig erfolgt, gesättigte $\alpha$-verzweigte Aldehyde, falls die Hydrierung zum Guerbet-Alkohol nicht vollständig war, oder insbesondere $\beta$-verzweigte primäre Alkohole, welche zusätzliche Verzweigungen in der Seitenkette oder Hauptkette aufweisen.

Bei der Dimerisierung der Alkohole gemäß der Formel R-$CH_2CH_2$-OH, kann es sich um eine Mischung von Alkoholen handeln. Dies kann u.a. ein C10C12-Fettalkoholgemisch (linear, gesättigt), ein C10C12-Gemisch aus Ziegleralkoholen mit 10 beziehungsweise 12 Kohlenstoffatomen, ein C10C12-Fettalkoholgemisch (linear und teilweise ungesättigt) oder ein Gemisch aus C10C12-Oxoalkohol sein.

Die Dimerisierung der Alkohole gemäß der Formel R-$CH_2CH_2$-OH, Wobei R für einen linearen oder verzweigten, gesättigten oder ungesättigten aliphatischen Kohlenwasserstoffrest mit 8 oder 10 Kohlenstoffatomen steht, liefert gemäß einer bevorzugten Ausführungsform der Erfindung Guerbetalkohole mit 20, 22 und 24 Kohlenstoffatomen.

In einer besonders bevorzugten Ausführung handelt es sich bei R um einen linearen gesättigten oder ungesättigten (bevorzugt gesättigt) aliphatischen Kohlenwasserstoffrest mit 8 oder 10 Kohlenstoffatomen.

Zur Herstellung der Guerbetalkohole in Verfahrensschritt (a) werden Mischungen der Alkohole (II) kondensiert. Bevorzugt liegt der Anteil an Alkohole mit R = 8 zwischen 25 - 50 mol%, der Anteil an Alkohole mit R = 10 zwischen 50 - 75 mol%. Dabei werden besonders bevorzugt etwa 30 mol % Alkohole mit R = 8 und 70 mol % Alkohole mit R = 10 umgesetzt.

Die Kondensation von Alkoholen (II) zu Guerbet Alkoholen wird vorzugsweise in Gegenwart von 0.5 bis 10 Gew.%, bezogen auf den Alkohol, Alkali- oder Erdalkalihydroxid, wie zum Beispiel Lithiumhydroxid, Natriumhydroxid, Cäsiumhydroxid oder Kalium-hydroxid bevorzugt Kaliumhydroxid durchgeführt. Im Hinblick auf eine hohe Reaktionsgeschwindigkeit und einen geringen Anteil an Nebenkomponenten werden die Alkali- oder Erdalkalihydroxid in einer Konzentration von 3 bis 6 Gew.-% bezogen auf den Alkohol einzusetzen. Das Alkali- oder Erdalkalihydroxid kann in fester

Form (Schuppen, Pulver) oder in Form einer 30 bis 70%ig, bevorzugt 50%ig wässerige Lösung eingesetzt werden.

Gemäß einer bevorzugten Ausführungsform werden die Alkohole der Formel (II) in Anwesenheit von NaOH urid/oder KOH kondensiert.

Bei dem Katalysator oder Katalysatoren eignen sich die aus dem Stand der Technik bekannten Katalysatoren, wie zum Beispiel im US3119880 (Nickel, Blei Salze), im US35558716 (Kupfer, Blei, Zink, Chromiüm, Molybdenum, Tungsten und Maganese Oxyde), im US 3979466 (Palladium Komplexe) oder noch im US 3864407 (Silber Komplexe). Bevorzugt wird ZnO als Katalysator für die Dimerisierung eingesetzt werden.

Bei dem Katalysator oder Katalysatoren handelt es sich bevorzugt um ZnO-Katalysatoren, die allgemein der Mischung, aus der die Guerbetalkohole hergestellt werden, zugesetzt werden.

Die Mischung aus Guerbet-Alkoholen kann nach dem aus DE 3901095 A1 bekannten Verfahren hergestellt werden.

Gemäß einer bevorzugten Ausführungsform der Erfindung werden die Guerbetalkohole in Verfahrensschritt (a) bei einer Temperatur im Bereich von 150 bis 320°C, bevorzugt bei einer Temperatur im Bereich von 180 bis 280°C gegebenenfalls in Anwesenheit eines Katalysators beziehungsweise Katalysatoren synthetisiert.

Die Tenside gemäß der allgemeinen Formel können in prinzipiell bekannter Art und Weise durch Alkoxylierung von entsprechenden Alkoholen $(R^1)(R^2)$-CH-$CH_2$-OH in Verfahrensschritt (b) hergestellt werden. Die Durchführung derartiger Alkoxylierungen ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate beeinflussen kann.

Die Tenside gemäß der allgemeinen Formel können in Verfahrensschritt (b) bevorzugt durch Basen-katalysierte Alkoxylierung hergestellt werden. Dabei kann der Alkohol $(R^1)(R^2)$-CH-$CH_2$-OH in einem Druckreaktor mit Alkalimetallhydroxiden, bevorzugt Kaliumhydroxid, oder mit Alkalialkoholaten, wie beispielsweise Natriummethylat, versetzt werden. Durch verminderten Druck (beispielsweise < 100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (zum Beispiel Stickstoff) inertisiert und das oder die Alkylenoxid(e) bei Temperaturen von 60 bis 180°C bis zu einem Druck von maximal 10 bar schrittweise zugegeben. Gemäß einer bevorzugten Ausführung wird das Alkylenoxid anfangs bei 130°C zudosiert. Im Laufe der Reaktion steigt durch die freiwerdende Reaktionswärme die Temperatur auf bis zu 170°C an. Gemäß einer weiteren bevorzugten Ausführungsform der Erfindung wird dabei zuerst das Butylenoxid bei einer Temperatur im Bereich von 125 bis 145°C zugegeben, daraufhin das Propylenoxid bei einer Temperatur im Bereich von 130 bis 145°C zugegeben und anschließend das Ethylenoxid bei einer Temperatur im Bereich von 125 bis 155°C zugegeben. Am Ende der Reaktion kann der Katalysator beispielsweise durch Zugabe von Säure (beispielsweise Essigsäure oder Phosphorsäure) neutralisiert und bei Bedarf abfiltriert werden.

Die Alkoxylierung der Alkohole $(R^1)(R^2)$-CH-$CH_2$-OH kann aber auch mittels anderer Methoden vorgenommen werden, beispielsweise durch säurekatalysierte Alkoxylierung. Weiterhin können beispielsweise Doppelhydroxidtone, wie in DE 4325237 A1 beschrieben, eingesetzt werden oder es können Doppelmetallcyanid-Katalysatoren (DMC-Katalysatoren) verwendet werden. Geeignete DMC-Katalysatoren sind beispielsweise in der DE 10243361 A1, insbesondere in den Abschnitten [0029] bis [0041] sowie der dort zitierten Literatur, offenbart. Beispielsweise können Katalysatoren vom Zn-Co-Typ eingesetzt werden. Zur Durchführung der Reaktion kann der Alkohol $(R^1)(R^2)$-CH-$CH_2$-OH mit dem Katalysator versetzt, die Mischung wie oben beschrieben entwässert und mit den Alkylenoxiden wie beschrieben umgesetzt werden. Es werden üblicherweise nicht mehr als 1000 ppm Katalysator bezüglich der Mischung eingesetzt und der Katalysator kann aufgrund dieser geringen Menge im Produkt verbleiben. Die Katalysatormenge kann in der Regel geringer sein als 1.000 ppm, beispielsweise 250 ppm oder weniger.

Der Verfahrensschritt (c) betrifft die Umsetzung der in Schritt (b) erhaltenen Alkoholalkoxylate mit einer Gruppe $Y^{a-}$, gegebenenfalls unter Ausbildung einer Spacergruppe OX.

So können beispielsweise Sulfat- und Phosphatgruppen dadurch eingeführt werden, dass diese direkt (gegebenenfalls nach Aktivierung) mit dem Alkohol umgesetzt werden. Sulfonatgruppen können durch Vinyladdition, Substitutionsreaktion oder Aldolreaktion, gegebenenfalls mit anschließender Hydrierung, eingeführt werden, wobei entsprechende Spacer OX erzeugt werden. Alternativ kann der Alkohol auch vorher in ein Chlorid umgewandelt werden, das anschließend einer direkten Sulfonierung zugänglich ist. Carboxylate können beispielsweise durch Umsetzung mit Chloracetat, Acrylat oder substituierte Acrylate $H_2C=(R')C(O)O^-$, wobei R' H oder ein Alkylrest mit 1 bis 4 Kohlenstoffatomen ist, erhalten werden.

Grundsätzlich setzt sich die anionische Gruppe $Y^{a-}$ aus der funktionellen Gruppe $Y^{a-}$, welche eine Sulfat-, Sulfonat-, Carboxylat- oder Phosphatgruppe ist, sowie dem Spacer OX zusammen, der im einfachsten Fall eine Einfachbindung sein kann o = 0)). Im Falle einer Sulfatgruppe kann man beispielsweise auf die Umsetzung mit Schwefelsäure, Chlorsulfonsäure oder Schwefeltrioxid im Fallfilmreaktor mit nachfolgender Neutralisierung zurückgreifen. Im Falle einer Sulfonatgruppe kann man beispielsweise auf die Umsetzung mit Propansulton und nachfolgender Neutralisierung, mit Butansulton und nachfolgender Neutralisierung, mit Vinylsulfonsäure Natriumsalz oder mit 3-Chloro-2-hydroxy-propansulfonsäure Natriumsalz zurückgreifen. Zur Herstellung von Sulfonaten kann auch die terminale OH-Gruppe in ein Chlorid beispielsweise mit Phosgen oder Thionylchlorid überführt und anschließend beispielsweise mit Sulfit umgesetzt werden.

Im Falle einer Carboxylatgruppe kann man beispielsweise auf die Oxidation des Alkohols mit Sauerstoff und nachfolgender Neutralisierung beziehungsweise die Umsetzung mit Chloressigsäurenatriumsalz zurückgreifen. Carboxylate können beispielsweise auch durch Michael Addition von (Meth)Acrylsäure oder -ester erhalten werden. Phosphate können beispielsweise durch Veresterungsreaktion mit Phosphorsäure oder Phosphorpentachlorid erhalten werden.

Neben den Tensiden gemäß der allgemeinen Formel (I), (II) und (III) kann die Formulierung darüber hinaus optional noch weitere Tenside umfassen. Dies sind zum Beispiel anionische Tenside des Typus Alkylarylsulfonat, Petroleumsulfonat oder Olefinsulfonat (alpha-Olefinsulfonat oder internes Olefinsulfonat) und/oder nichtionische Tenside des Typus Alkylethoxylat oder Alkylpolyglucosid. Es können auch betainische Tenside verwendet werden. Bei diesen weiteren Tensiden kann es sich insbesondere auch um oligomere oder polymere Tenside handeln. Mit derartigen polymeren Co-Tensiden lässt sich vorteilhaft die zur Bildung einer Mikroemulsion notwendige Menge an Tensiden reduzieren. Derartige polymere Co-Tenside werden daher auch als "Mikroemulsionsbooster" bezeichnet. Beispiele derartiger polymerer Tenside umfassen amphiphile Block-Copolymere, die mindestens einen hydrophilen und mindestens einen hydrophoben Block umfassen. Beispiele umfassen Polypropylenoxid-Polyethylenoxid-Block-Copolymere, Polyisobuten-Polyethylenoxid-Block-Copolymere sowie Kammpolymere mit Polyethylenoxyd-Seitenketten und einer hydrophoben Hauptkette, wobei die Hauptkette bevorzugt im Wesentlichen Olefine oder (Meth)acrylate als Baueinheiten umfasst. Der Begriff "Polyethylenoxid" soll hierbei jeweils Propylenoxideinheiten umfassende Polyethylenoxidblöcke gemäß obiger Definition einschließen. Nähere Einzelheiten zu derartigen Tensiden sind in WO 2006/131541 A1 offenbart.

Bei dem erfindungsgemäßen Verfahren zur Erdölförderung wird eine geeignete wässrige Formulierung der Tenside gemäß der allgemeinen Formel durch mindestens eine Injektionsbohrung in die Erdöllagerstätte eingepresst und der Lagerstätte wird durch mindestens eine Produktionsbohrung Rohöl entnommen. Mit dem Begriff "Rohöl" ist in diesem Zusammenhang selbstverständlich nicht phasenreines Öl gemeint, sondern gemeint sind die üblichen Rohöl-Wasser-Emulsionen. In der Regel wird eine Lagerstätte mit mehreren Injektionsbohrungen und mit mehreren Produktionsbohrungen versehen.

Die Hauptwirkung des Tensides liegt in der Reduzierung der Grenzflächenspannung zwischen Wasser und Öl - wünschenswerterweise auf Werte deutlich < 0,1 mN/m. Im Anschluss an das Einpressen der Tensidformulierung, dem so genannten "Tensidfluten" beziehungsweise bevorzugt das Winsor Typ III "Mikroemulsionsfluten", kann zur Aufrechterhaltung des Drucks Wasser in die Formation injiziert werden ("Wasserflüten") oder bevorzugt eine höher viskose wässrige Lösung eines stark verdickend wirkenden Polymers ("Polymerfluten"). Es sind aber auch Techniken bekannt, nach denen man die Tenside zunächst einmal auf die Formation einwirken lässt. Eine weitere bekannte Technik ist die Injektion einer Lösung aus Tensiden und verdickend wirkenden Polymeren gefolgt von einer Lösung aus verdickend wirkendem Polymer. Dem Flachmann sind Einzelheiten zur technischen Durchführung des "Tensidflutens", "Wasserflutens" und des "Polymerflutens" bekannt und er wendet je nach Art der Lagerstätte eine entsprechende Technik an.

Für das erfindungsgemäße Verfahren wird eine wässrige Formulierung, welche Tenside der allgemeinen Formel (I) enthält, eingesetzt. Neben Wasser können die Formulierungen optional auch noch mit Wasser mischbare oder zumindest in Wasser dispergierbare organische oder sonstige Mittel enthalten. Derartige Zusätze dienen insbesondere zur Stabilisierung der Tensidlösung während der Lagerung beziehungsweise des Transports zum Ölfeld. Die Menge derartiger zusätzlicher Lösungsmittel sollte aber im Regelfall 50 Gew.-%, bevorzugt 20 Gew.-% nicht überschreiten. In einer besonders vorteilhaften Ausführungsform der Erfindung wird ausschließlich Wasser zum Formulieren verwendet. Beispiele mit Wasser mischbarer Lösungsmittel umfassen insbesondere Alkohole wie Methanol, Ethanol und Propanol, Butanol, sek-Butanol, Pentanol, Butylethylenglykol, Butyldiethylenglykol oder Butyltriethylenglykol.

In einer bevorzugten Ausführung der Erfindung sollen die bezüglich des Kohlenwasserstoffteils $(R^1)(R^2)$-CH-$CH_2$- drei verschiedenen Tenside der allgemeinen Formel (I) in der Formulierung, welche letztendlich in die Lagerstätte injiziert wird, die Hauptkomponente unter allen Tensiden ausmachen. Dies sind bevorzugt mindestens 25 Gew.-%, besonders bevorzugt mindestens 30 Gew.%, ganz besonders bevorzugt mindestens 40 Gew.% und ganz, ganz besonders bevorzugt mindestens 50 Gew.% aller eingesetzten Tenside.

Die erfindungsgemäß verwendete Mischung kann bevorzugt zum Tensidfluten von Lagerstätten eingesetzt werden. Sie eignet sich insbesondere zum Winsor Typ III Mikroemulsionsfluten (Fluten im Winsor III-Bereich beziehungsweise im Existenzgebiet der bikontinuierlichen Mikroemulsionsphase). Die Technik des Mikroemulsionsflutens wurde bereits eingangs ausführlich beschrieben.

Neben den Tensiden können die Formulierungen auch noch weitere Komponenten enthalten, wie beispielsweise $C_4$- bis $C_8$-Alkohole und/oder basische Salze (sogenanntes "alkali surfactant flooding"). Mit derartigen Zusätzen kann beispielsweise die Retention in der Formation reduziert werden. Das Mengenverhältnis der Alkohole bezüglich der eingesetzten Gesamt-Tensidmenge beträgt in der Regel mindestens 1:1 - es kann jedoch auch ein deutlicher Überschuss an Alkohol verwendet werden. Die Menge an basischen Salzen kann typischerweise von 0,1 Gew.-% bis 5 Gew.-% reichen. Den basischen Salzen können optional Chelatbildner (wie z.B. EDTA) zugesetzt werden - typischerweise 0,03 Gew.-% bis 5 Gew.-%.

Die Lagerstätten in denen das Verfahren angewandt wird, weisen in der Regel eine Temperatur von mindestens 10°C, beispielsweise 10 bis 150°C auf, bevorzugt eine Temperatur von mindestens 15°C bis 120°C. Die Gesamtkonzentration aller Tenside zusammen beträgt 0,05 bis 5 Gew.-% bezüglich der Gesamtmenge der wässrigen Tensidformulierung, bevorzugt 0,1 bis 2,5 Gew.-%. Der Fachmann trifft je nach den gewünschten Eigenschaften, insbesondere je nach den Verhältnissen in der Erdölformation, eine geeignete Auswahl. Für den Fachmann ist hierbei klar, dass sich die Konzentration der Tenside nach dem Injizieren in die Formation ändern kann, weil sich die Formulierung mit Formationswasser vermischen kann oder Tenside auch an festen Oberflächen der Formation absorbieren können. Es ist der große Vorteil der erfindungsgemäß verwendeten Mischung, dass die Tenside zu einer besonders guten Grenzflächenspannungserniedrigung führen.

Es ist selbstverständlich möglich und auch empfehlenswert, zunächst ein Konzentrat herzustellen, das erst vor Ort auf die gewünschte Konzentration zum Injizieren in die Formation verdünnt wird. In der Regel beträgt die Gesamtkonzentration der Tenside in einem solchen Konzentrat 10 bis 45 Gew.-%.

## Beispiele

Teil I: Synthese der Tenside

Allgemeine Vorschrift 1: Herstellung des Guerbet-Alkohols

In einem 1L Kolben wird der oder werden die Alkohole (1 eq.) vorgelegt und gegebenenfalls bei 50°C aufgeschmolzen. KOH-Pulver (0.24 eq.) und Zinkoxyd (5 Gew.% bzgl. des Starteralkoholes) werden unter Rühren zugegeben. Die Reaktionsmischung wird schnellstmöglich auf 180-230°C erhitzt und das entstehende Reaktionswasser wird über einen Destillationsabgang abdestilliert. Für eine schnellstmögliche Entfernung des Reaktionswassers wird der Glaskolben optional mit Aluminiumfolie isoliert. Die Reaktionsmischung wird 6 bis 30 Stunden bei der gegebenen Temperatur nachgerührt. Die entstandene Alkoholmischung wird per Gaschromatographie analysiert und ohne weitere Aufarbeitung für die nachfolgende Alkoxylierung eingesetzt.

Allgemeine Vorschrift 2: Alkoxylierung mittels KOH-Katalyse (gilt für Verwendung von EO, PO und/oder 1,2-BuO)

In einem 2l Autoklaven wird der zu alkoxylierende Alkohol (1,0 eq) optional mit einer wässrigen KOH-Lösung, die 50 Gew.-% KOH enthält, versetzt. Dabei beträgt die Menge an KOH 0,2 Gew.-% des herzustellenden Produktes. Unter Rühren wird die Mischung bei 100°C und 20 mbar für 2 h entwässert. Anschließend wird dreimal mit $N_2$ gespült, ein Vordruck von ca. 1,3 bar $N_2$ eingestellt und die Temperatur auf 120 bis 130°C erhöht. Das Alkylenoxid wird so zudosiert, dass die Temperatur zwischen 125°C bis 155°C (bei Ethylenoxid) bzw. 130 bis 145°C (bei Propylenoxid) bzw. 125 bis 145°C (bei 1,2-Butylenoxid) bleibt. Anschließend wird 5 h bei 125 bis 145°C nachgerührt, mit $N_2$ gespült, auf 70°C abgekühlt und der Reaktor entleert. Das basische Rohprodukt wird mit Hilfe von Essigsäure neutralisiert. Alternativ kann die Neutralisierung auch mit handelsüblichen Mg-Silikaten erfolgen, welche anschließend abfiltriert werden. Das helle Produkt wird mit Hilfe eines 1H-NMR-Spektrums in CDCl3, einer Gel-Permeations-Chromatographie sowie einer OH-Zahl-Bestimmung charakterisiert und die Ausbeute ermittelt.

Allgemeine Vorschrift 3: Alkoxylierung mittels DMC-Katalyse

In einem 2l Autoklaven wird der zu alkoxylierende Alkohol (1,0 eq) mit einem Doppelmetallcyanid-Katalysator (z.B. DMC-Katalysator der Firma BASF Typ Zn-Co) bei 80°C vermischt. Zur Aktivierung des Katalysators wird bei 80°C für 1 h ca. 20 mbar angelegt. Dabei beträgt die Menge an DMC 0,1 Gew.-% und weniger des herzustellenden Produktes. Anschließend wird dreimal mit $N_2$ gespült, ein Vordruck von ca. 1.3 bar $N_2$ eingestellt und die Temperatur auf 120 bis 130°C erhöht. Das Alkylenoxid wird so zudosiert, dass die Temperatur zwischen 125°C bis 135°C (bei Ethylenoxid) bzw. 130 bis 140°C (bei Propylenoxid) bzw. 135 bis 145°C (bei 1,2-Butylenoxid) bleibt. Anschließend wird 5 h bei 125 bis 145°C nachgerührt, mit $N_2$ gespült, auf 70°C abgekühlt und der Reaktor entleert. Das helle Produkt wird mit Hilfe eines 1H-NMR-Spektrums in CDCl3, einer Gelpermeationschromatographie sowie einer OH-Zahl-Bestimmung charakterisiert und die Ausbeute ermittelt.

Allgemeine Vorschrift 4: Sulfatierung mittels Chlorsulfonsäure

In einem 1l Rundhalskolben wird das zu sulfatierende Alkylalkoxylat (1,0 eq) in der 1,5-fachen Menge Dichlormethan (auf Basis von Gewichtsprozent) gelöst und auf 5 bis 10°C abgekühlt. Danach wird Chlorsulfonsäure (1,1 eq) so zugetropft, dass die Temperatur nicht 10°C übersteigt. Man lässt auf Raumtemperatur erwärmen und 4 h bei dieser

Temperatur unter $N_2$-Strom rühren, bevor obiges Reaktionsgemisch in eine wässrige NaOH-Lösung mit halbem Volumen bei max. 15°C getropft wird. Die NaOH-Menge ist so berechnet, dass sich ein leichter Überschuss bezüglich der verwendeten Chlorsulfonsäure ergibt. Der resultierende pH-Wert liegt bei ca. pH 9 bis 10. Das Dichlormethan wird unter leichtem Vakuum am Rotationsverdampfer bei max. 50°C entfernt.

Das Produkt wird per 1 H-NMR charakterisiert und der Wassergehalt der Lösung bestimmt (ca. 70%).

Für die Synthese wird der nachfolgenden Alkohol eingesetzt.

| Alkohol | Beschreibung |
|---|---|
| $C_{10}C_{12}$ | Kommerziell erhältliches Fettalkoholgemisch bestehend aus linearem $C_{10}H_{21}$-OH und $C_{12}H_{25}$-OH |
| C20-Guerbet | Kommerziell erhältlicher Guerbetalkohol 2-Octyldodecan-1-ol |
| C24-Guerbet | Kommerziell erhältlicher 2-Decyltetradecan-1-ol |

Anwendungstechnische Tests

Mit den erhaltenen Tensiden werden die folgenden Tests durchgeführt, um deren Eignung zur tertiären Erdölförderung zu bewerten.

Beschreibung der Messmethoden

Ermittlung von SP*

a) Prinzip der Messung:

Die Grenzflächenspannung zwischen Wasser und Öl wird in bekannter Art und Weise über die Messung des Solubilisationsparameters SP* bestimmt. Die Bestimmung der Grenzflächenspannung über die Bestimmung des Solubilisatiorisparameters SP* ist eine in der Fachwelt akzeptierte Methode zur näherungsweisen Bestimmung der Grenzflächenspannung. Der Solubilisationsparameter SP* gibt an, wie viel ml Öl pro ml eingesetztem Tensid in einer Mikroemulsion (Windsor Typ III) gelöst ist. Die Grenzflächenspannung (interfacial tension; IFT) kann hieraus über die Näherungsformel IFT 0.3/$(SP^*)^2$ errechnet werden, falls gleiche Volumina von Wasser und Öl eingesetzt werden (C. Huh, J. Coll. Interf. Sc., Vol. 71, No. 2 (1979)).

b) Arbeitsvorschrift

Zur Bestimmung des SP* wird ein 100 ml Messzylinder mit Magnetrührfisch mit 20 ml Öl und 20 ml Wasser befüllt. Dazu werden die Konzentrationen der jeweiligen Tenside gegeben. Anschließend wird die Temperatur von 20 auf 90°C schrittweise erhöht, und es wird beobachtet, in welchem Temperaturfenster sich eine Mikroemulsion bildet.

Die Ausbildung der Mikroemulsion kann visuell beobachtet werden oder auch mit Hilfe von Leitfähigkeitsmessungen. Es bildet sich ein Dreiphasensystem aus (obere Phase Öl, mittlere Phase Mikroemulsion, untere Phase Wasser). Sind obere und untere Phase gleich groß und verändern sich über einen Zeitraum von 24 h auch nicht mehr, so hat man die optimale Temperatur ($T_{opt}$) der Mikroemulsion gefunden. Das Volumen der mittleren Phase wird bestimmt. Von diesem Volumen wird das Volumen an zugegebenem Tensid abgezogen. Der erhaltene Wert wird danach durch zwei geteilt. Dieses Volumen wird nun durch das Volumen an zugegebenem Tensid geteilt. Das Ergebnis wird als SP* notiert.

Die Art der zur Bestimmung von SP* eingesetzten Öls und Wassers wird je nach dem zu untersuchenden System bestimmt. Es kann einerseits Erdöl selbst eingesetzt werden, oder auch ein Modellöl wie beispielsweise Decan. Als Wasser kann sowohl reines Wasser eingesetzt werden, wie auch salines Wasser, um die Verhältnisse in der Erdölformation besser zu modellieren. Die Zusammensetzung der wässrigen Phase kann beispielsweise entsprechend der Zusammensetzung eines bestimmten Lagerstättenwassers eingestellt werden. Alternativ kann auch eine wässrige NaCl-Lösung verwendet werden.

Die Tenside werden zwecks Vergleichbarkeit mit bekannten Systemen optional mit anionischen Cotensiden und Cosolventien kombiniert und getestet.

Eine weitere mögliche Testform stellt die Bestimmung der Grenzflächenspannung von Rohöl in Gegenwart der Tensidlösung bei entsprechender Temperatur per spinning-drop-Verfahren an einem SVT20 der Firma DataPhysics bestimmt. Dazu wird ein Öltropfen in eine mit saliner Tensidlösung gefüllter Kapillare Temperatur injiziert und die Ausdehnung des Tropfens bei ca. 4500 Umdrehungen pro Minute beobachtet bis ein konstanter Wert sich einstellt. Dies ist üblicherweise nach 2 h der Fall. Die Grenzflächenspannung IFT (oder $\sigma□_{\|}$) errechnet sich dabei - wie von Hans-Dieter

Dörfler in "Grenzflächen und kolloid-disperse Systeme" Springer Verlag Berlin Heidelberg 2002 beschrieben - nach folgender Formel aus dem Zylinderdurchmesser $d_2$, der Drehzahl ω, und der Dichtedifferenz ($d_1$-$d_2$):

$$\sigma\square_{II} = 0,25 \cdot d_z^3 \cdot \omega 2 \cdot (d_1-d_2)$$

Für das spinning-drop-Verfahren wurde im vorliegenden Fall Rohöl einer Lagerstätte bei 20°C verwendet. Das Öl weist ungefähr 16°API auf. Die Lagerstättentemperatur liegt bei ca. 20°C. Das Reservoirwasser ist salzhaltig. Mit Hilfe von NaCl und $NaHCO_3$ wurde die Salinität künstlich nachgestellt.

Man verwendete eine Tensidlösung, welche in die Formation injiziert werden könnte. Neben den Tensiden enthielt sie Wasser und Salz. Als weitere Salzkomponente wurde 0.25% $Na_2CO_3$ zugefügt. Die Tensidlösung enthielt eine 0.1% einer Mischung aus Alkylethersulfate des Typus Guerbetalkyl-7BuO-7PO-10EO-Sulfat und Petrostep S3B (internes Olefinsulfonat der Firma Stepan) sowie 0,05% Butyldiethylenglykol und 0.07% Sokalan® PA 20 (Polyacrylat Natriumsalz). Bei den Alkylethersulfaten wurden erfindungsgemässe und nicht-erfindungsgemässe Tenside verwendet. Im letzteren Fall wurden die Beispiele mit "V" gekennzeichnet.

Die gesamte Tensidkonzentration sowie die Menge an $Na_2CO_3$ beziehen sich auf die Aktivsubstanz und sind in Gewichtsprozent der wässrigen Phase angegeben.

Die Versuchsergebnisse des spinning-drop-Verfahrens sind in Tabelle 1 dargestellt.

**Tabelle 1 Versuche mit Rohöl bei 20°C**

| **Beispiel** | **Tensidformulierung** | **$Na_2CO_3$** | **NaCl + $NaHCO_3$** | **IFT** |
|---|---|---|---|---|
| V1 | 0,07% $C_{20}$-Guerbet-7BuO-7PO-10EO-Sulfat, 0,03% Petrostep S3B, 0,05% Butyldiethylenglykol, 0.07% Sokalan PA 20 (Rest Wasser und Salz wie rechts angegeben) | 0.25% | 1.2% + 0.41% | 0,0162 mN/m |
| V2 | 0,07% $C_{24}$-Guerbet-7BuO-7PO-10EO-Sulfat, 0,03% Petrostep S3B, 0,05% Butyldiethylenglykol, 0.07% Sokalan PA 20 (Rest Wasser und Salz wie rechts angegeben) | 0.25% | 1.2% + 0.41% | 0,0179 mN/m |
| 3 | 0,07% $C_{20}C_{22}C_{24}$-Guerbet-7BuO-7PO-10EO-Sulfat, 0,03% Petrostep S3B, 0,05% Butyldiethylenglykol, 0.07% Sokalan PA 20 (Rest Wasser und Salz wie rechts angegeben) | 0.25% | 1.2% + 0.41% | 0,0043 mN/m |

Wie in Tabelle 1 im Beispiel V1 und V2 zu sehen ist, liefern die nichterfindungsgemäßenTenside basierend auf nur einem Guerbetalkohol (C20-Guerbert bei V1 und C24-Guerbet bei V2) jeweils nur Grenzflächenspannungswerte von 0.0162 mN/m bzw. 0.0179 mN/m. Setzt man jedoch wie in Beispiel 3 erfindungsgemäße Tenside basierend auf der Mischung von mindestens 3 Guerbetresten (C20C22C24-Guerbet) unter ansonsten identischen Bedingungen ein, so gelangt man überraschenderweise zu ultraniedrigen Grenzflächenspannungen von <0.01 mN/m ( 0.0043 mN/m im vorliegenden Fall). Dies ist umso überraschender, da die Mischung in Bsp. 3 die Einzeltenside aus V1 und V2 enthält.

## Patentansprüche

1. Tensidmischung enthaltend bezüglich des Kohlenwasserstoffteils $(R^1)(R^2)$-CH-$CH_2$-mindestens drei verschiedene ionische Tenside der allgemeinen Formel (I)

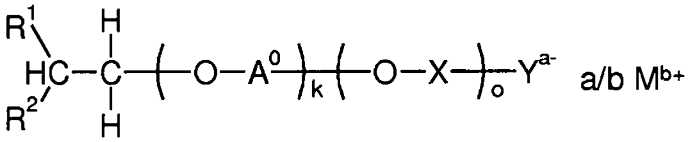 (I)

,

wobei

$R^1$ für einen linearen, gesättigten oder ungesättigten aliphatischen Kohlenwasserstoffrest mit 8 oder 10 Kohlenstoffatomen steht,
$R^2$ für einen linearen, gesättigten oder ungesättigten aliphatischen Kohlenwasserstoffrest mit 10 oder 12 Kohlenstoffatomen steht, wobei die Reste $R^1$ und $R^2$ derart gewählt sind, dass die mindestens 3 ionischen Tenside der allgemeinen Formel (I) einen Kohlenwasserstoffrest $(R^1)(R^2)CHCH_2$- mit 20 Kohlenstoffatomen, 22 Kohlenstoffatomen und 24 Kohlenstoffatomen ergeben; wobei das $C_{20}$-Tensid der allgemeinen Formel (I) in einem Bereich von 10 % bis 30 %, das $C_{22}$-Tensid der allgemeinen Formel (I) in einem Bereich von 5 % bis 25 % und das $C_{24}$-Tensid der allgemeinen Formel (I) in einem Bereich von 55 % bis 85 %, bezogen auf die molare Summe der drei Tenside, -vorliegt;
jedes A° unabhängig für Ethylen, Propylen oder Butylen;
k für eine ganze Zahl von 1 bis 99,
X für eine verzweigte oder unverzweigte Kohlenwasserstoffgruppe mit 1 bis 10 Kohlenstoffatomen, die mit einer OH-Gruppe substituiert sein kann;
o für 0 oder 1;
$M^{b+}$ für ein Kation;
$Y^{a-}$ für eine Sulfatgruppe, Sulfonatgruppe, Carboxylatgruppe oder eine Phosphatgruppe;
b für 1, 2 oder 3 und
a für 1 oder 2 steht.

**2.** Tensidmischung nach Anspruch 1, **dadurch gekennzeichnet, dass** k eine ganze Zahl im Bereich von 4 bis 50 ist.

**3.** Tensidmischung nach Anspruch 1 oder 2, **dadurch gekennzeichnet, dass** in Formel (I) der Rest $(OX)_oY^{a-}$ für $OS(O)_2O^-$, $OCH_2CH_2S(O)_2O^-$, $OCH_2CH(OH)CH_2S(O)_2O^-$, $O(CH_2)_3S(O)_2O^-$, $S(O)_2O^-$, $CH_2C(O)O^-$ oder für $CH_2CH(R')C(O)O^-$, wobei R' Wasserstoff oder ein Alkylrest mit 1 bis 4C-Atomen ist, steht.

**4.** Tensidmischung nach Anspruch 1 oder 2, **dadurch gekennzeichnet, dass** in Formel (I) $(OA)_k$ für n Butylen-, m Propylen- und l Ethylenoxygruppen steht, wobei n+m+l=k.

**5.** Tensidmischung nach Anspruch 4, **dadurch gekennzeichnet, dass** die n Butylen-, m Propylen- und l Ethylenoxygruppen blockweise angeordnet sind.

**6.** Tensidmischung nach Anspruch 5, **dadurch gekennzeichnet, dass** anschließend an den Rest $(R^1)(R^2)$-CH-$CH_2$- in Formel (I) für $(OA)_k$ ein Butylenoxyblock mit n Butylenoxygruppen, gefolgt von einem Propylenoxyblock mit m Propylenoxygruppen und abschließend ein Ethylenoxyblock mit l Ethylenoxygruppen auftritt.

**7.** Tensidmischung nach einem der Ansprüche 4 bis 6, **dadurch gekennzeichnet, dass** m für eine ganze Zahl von 4 bis 15 und/oder l für eine ganze Zahl von 0 bis 25 und/oder n für eine ganze Zahl von 2 bis 15 steht.

**8.** Tensidmischung nach einem der Ansprüche 1 bis 7, **dadurch gekennzeichnet, dass** diese weiterhin Tenside der Formel

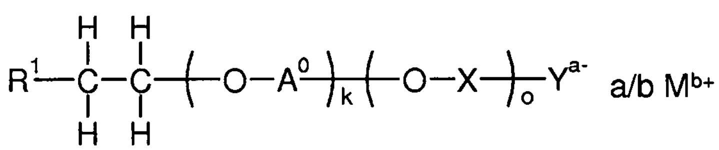

(II)

und der Formel

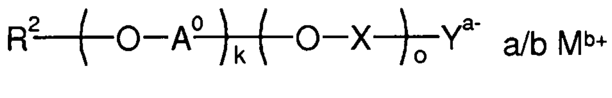

(III)

enthält, wobei $R^1$, $R^2$, $A^0$, X, $Y^{a-}$, $M^{b+}$, k, o, a und b die für Formel (I) angegebene Bedeutung besitzen.

**9.** Tensidmischung nach Anspruch 8, **dadurch gekennzeichnet, dass** der Anteil an Tensiden der Formel (I) in Bezug auf die Summe der Mengen an Tensiden der Formeln (I), (II) und (III) im Bereich von 80 Gew.-% bis 99 Gew.-% liegt.

**10.** Wässrige Tensidformulierung enthaltend eine Tensidmischung nach einem der Ansprüche 1 bis 9, wobei vorzugsweise die Tensidformulierung einen Gesamt-Tensidanteil von 0,05 bis 5 Gew.-% bezüglich der Gesamtmenge der wässrigen Tensidformulierung aufweist.

**11.** Verfahren zur Erdölförderung, mittels Winsor Typ III Mikroemulsionsflutens, bei dem eine wässrige Tensidformulierung nach Anspruch 10 zwecks Erniedrigung der Grenzflächenspannung zwischen Öl und Wasser auf < 0,1 mN/m, durch mindestens eine Injektionsbohrung in eine Erdöllagerstätte eingepresst und der Lagerstätte durch mindestens eine Produktionsbohrung Rohöl entnommen wird.

**12.** Verfahren zur Herstellung einer Tensidmischung nach einem der Ansprüche 1 bis 9, enthaltend die Schritte:

(a) Herstellung von Guerbetalkoholen der allgemeinen Formel (IV) $(R^1)(R^2)$-CH-$CH_2OH$ (IV), wobei $R^1$ und $R^2$ die in den Ansprüchen 1 bis 9 angegebene Bedeutung aufweisen, durch Kondensation einer Mischung mindestens zweier primärer Alkohole der Formel R-$CH_2$-$CH_2$-OH, wobei R für einen linearen oder verzweigten, gesättigten oder ungesättigten aliphatischen Kohlenwasserstoffrest mit 8 bis 10 Kohlenstoffatomen steht,
(b) Alkoxylierung der in Verfahrensschritt (a) erhaltenen Alkohole,
(c) Umsetzung der in Schritt (b) erhaltenen Alkoholalkoxylate mit einer Gruppe $Y^{a-}$, gegebenenfalls unter Ausbildung einer Spacergruppe OX.

**13.** Verwendung einer Tensidmischung nach einem der Ansprüche 1 bis 9 oder einer Tensidformulierung nach Anspruch 10 bei der Erdölförderung, mittels Winsor Typ III Mikroemulsionsflutens.

**Claims**

**1.** A surfactant mixture comprising at least three ionic surfactants which differ in terms of the hydrocarbyl moiety $(R^1)(R^2)$-CH-$CH_2$- and are of the general formula (I)

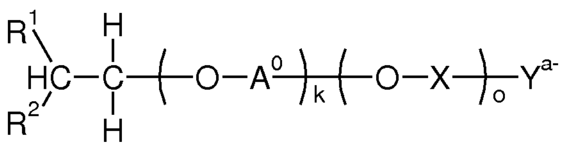 a/b $M^{b+}$ (I)

where

$R^1$ is a linear saturated or unsaturated aliphatic hydrocarbyl radical having 8 or 10 carbon atoms,
$R^2$ is a linear saturated or unsaturated aliphatic hydrocarbyl radical having 10 or 12 carbon atoms, where the $R^1$ and $R^2$ radicals are selected such that the at least 3 ionic surfactants of the general formula (I) give rise to hydrocarbyl radicals $(R^1)$ $(R^2)$ $CHCH_2$- with 20 carbon atoms, 22 carbon atoms and 24 carbon atoms; where the $C_{20}$ surfactant of the general formula (I) is within a range from 10% to 30%, the $C_{22}$ surfactant of the general formula (I) within a range from 5% to 25% and the $C_{24}$ surfactant of the general formula (I) within a range from 55% to 85%, based on the molar sum of the three surfactants;
each $A^0$ is independently ethylene, propylene or butylene;
k is an integer from 1 to 99,
X is a branched or unbranched hydrocarbylene group which has 1 to 10 carbon atoms and may be substituted by an OH group;
O is 0 or 1;
$M^{b+}$ is a cation;
$Y^{a-}$ is a sulfate group, sulfonate group, carboxylate group or phosphate group;
b is 1, 2 or 3 and
a is 1 or 2.

**2.** The surfactant mixture according to claim 1, wherein k is an integer in the range from 4 to 50.

**3.** The surfactant mixture according to claim 1 or 2, wherein the $(OX)_oY^{a-}$ radical in formula (I) is $OS(O)_2O^-$, $OCH_2CH_2S(0)\,_2O^-$, $OCH_2CH(OH)CH_2S(0)\,_2O^-$, $O(CH_2)_3S(O)_2O^-$, $S(O)_2O^-$, $CH_2C(O)O^-$ or $CH_2CH(R')C(O)O^-$, where R' is hydrogen or an alkyl radical having 1 to 4 carbon atoms.

**4.** The surfactant mixture according to claim 1 or 2, wherein $(OA)_k$ in formula (I) represents n butyleneoxy, m propyleneoxy and 1 ethyleneoxy groups, where n+m+l=k.

**5.** The surfactant mixture according to claim 4, wherein the n butyleneoxy, m propyleneoxy and 1 ethyleneoxy groups are arranged in blocks.

**6.** The surfactant mixture according to claim 5, wherein the $(R^1)(R^2)$-CH-$CH_2$- radical in formula (I) is followed, representing $(OA)_k$, by a butyleneoxy block with n butyleneoxy groups, followed by a propyleneoxy block with m propyleneoxy groups, and finally an ethyleneoxy block with 1 ethyleneoxy groups.

**7.** The surfactant mixture according to any of claims 4 to 6, wherein m is an integer from 4 to 15 and/or 1 is an integer of 0 to and/or n is an integer from 2 to 15.

**8.** The surfactant mixture according to any of claims 1 to 7, which further comprises surfactants of the formula

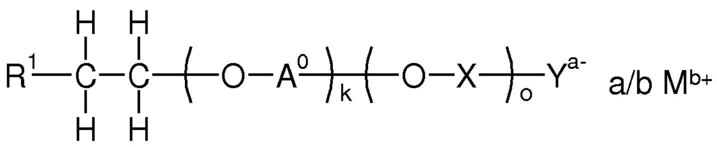

(II)

and of the formula

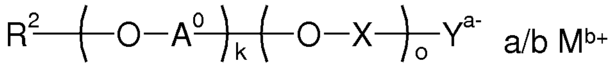

(III)

where $R^1$, $R^2$, $A^0$, X, $Y^{a-}$, $M^{b+}$, k, o, a and b are each as defined for formula (I).

**9.** The surfactant mixture according to claim 8, wherein the proportion of surfactants of the formula (I) in relation to the sum of the amounts of surfactants of the formulae (I), (II) and (III) is in the range from 80% by weight to 99% by weight.

**10.** An aqueous surfactant formulation comprising a surfactant mixture according to any of claims 1 to 9, said surfactant formulation preferably having a total surfactant content of 0.05 to 5% by weight based on the total amount of the aqueous surfactant formulation.

**11.** A process for producing mineral oil by means of Winsor type III microemulsion flooding, in which an aqueous surfactant formulation according to claim 10 is injected into a mineral oil deposit through at least one injection well for the purpose of lowering the interfacial tension between oil and water to <0.1 mN/m, and crude oil is withdrawn from the deposit through at least one production well.

**12.** A process for preparing a surfactant mixture according to any of claims 1 to 9, comprising the steps of:

(a) preparing Guerbet alcohols of the general formula (IV) $(R^1)$ $(R^2)$-CH-$CH_2OH$ (IV), where $R^1$ and $R^2$ are each as defined in claims 1 to 9, by condensing a mixture of at least two primary alcohols of the formula R-$CH_2$-$CH_2$-OH, where R is a linear or branched, saturated or unsaturated aliphatic hydrocarbyl radical having 8 to 10 carbon atoms,
(b) alkoxylating the alcohols obtained in process step (a),
(c) reacting the alcohol alkoxylates obtained in step (b) with a $Y^{a-}$ group, optionally to form a spacer group OX.

**13.** The use of a surfactant mixture according to any of claims 1 to 9 or of a surfactant formulation according to claim 10 in mineral oil production by means of Winsor type III microemulsion flooding.

## Revendications

**1.** Mélange de tensioactifs contenant, par rapport à la partie hydrocarbonée $(R^1)$ $(R^2)$ -CH-$CH_2$-, au moins trois tensioactifs ioniques différents de formule générale (I)

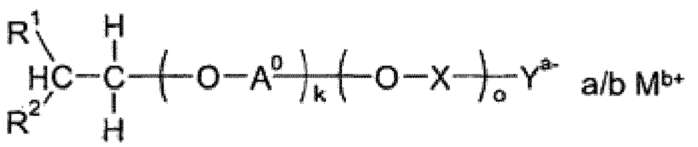 (I)

dans laquelle

$R^1$ représente un radical hydrocarboné aliphatique linéaire, saturé ou insaturé, comprenant 8 à 10 atomes de carbone,
$R^2$ représente un radical hydrocarboné aliphatique, linéaire, saturé ou insaturé, comprenant 10 ou 12 atomes de carbone, les radicaux $R^1$ et $R^2$ étant choisis de manière telle que lesdits au moins 3 tensioactifs ioniques de formule générale (I) entraînent un radical hydrocarboné ($R^1$) ($R^2$)$CHCH_2$-comprenant 20 atomes de carbone, 22 atomes de carbone et 24 atomes de carbone ; le tensioactif en $C_{20}$ de formule générale (I) étant présent dans une plage de 10% à 30%, le tensioactif en $C_{22}$ de formule générale (I) étant présent dans une plage de 5% à 25% et le tensioactif en $C_{24}$ de formule générale (I) étant présent dans une plage de 55% à 85%, par rapport à la somme molaire de trois tensioactifs ;
chaque $A^0$ représente, indépendamment, éthylène, propylène ou butylène ;
k vaut un nombre entier de 1 à 99,
X représente un groupe hydrocarboné ramifié ou non ramifié comprenant 1 à 10 atomes de carbone, qui peut être substitué par un groupe OH ;
O vaut 0 ou 1 ;
$M^{b+}$ représente un cation ;
$Y^{a-}$ représente un groupe sulfate, un groupe sulfonate, un groupe carboxylate ou un groupe phosphate ;
b vaut 1, 2 ou 3 et
a vaut 1 ou 2.

2. Mélange de tensioactifs selon la revendication 1, **caractérisé en ce que** k vaut un nombre entier de la plage de 4 à 50.

3. Mélange de tensioactifs selon la revendication 1 ou 2, **caractérisé en ce que**, dans la formule (I), le radical $(OX)_oY^{a-}$ représente $OS(O)_2O^-$, $OCH_2CH_2S$ (0) $_2O^-$, $OCH_2CH(OH)CH_2S(O)_2O^-$, $O(CH_2)_3S(O)_2O^-$, $S(O)_2O^-$, $CH_2C(O)O^-$ ou $CH_2CH(R')C(O)O^-$, R' représentant hydrogène ou un radical alkyle comprenant 1 à 4 atomes de carbone.

4. Mélange de tensioactifs selon la revendication 1 ou 2, **caractérisé en ce que**, dans la formule (I), $(OA)_k$ représente n groupes butylénoxy, m groupes propylénoxy et 1 groupes éthylénoxy, n + m + 1 = k.

5. Mélange de tensioactifs selon la revendication 4, **caractérisé en ce que** les n groupes butylénoxy, m groupes propylénoxy et 1 groupes éthylénoxy sont disposés par blocs.

6. Mélange de tensioactifs selon la revendication 5, **caractérisé en ce que** le radical ($R^1$)($R^2$)-CH-$CH_2$-dans la formule (I) est suivi, pour $(OA)_k$, d'un bloc butylénoxy comprenant n groupes butylénoxy, suivi d'un bloc propylénoxy comprenant m groupes propylénoxy et, pour finir, un bloc éthylénoxy comprenant 1 groupes éthylénoxy.

7. Mélange de tensioactifs selon l'une quelconque des revendications 4 à 6, **caractérisé en ce que** m vaut un nombre entier de 4 à 15 et/ou 1 vaut un nombre entier de 0 à et/ou n vaut un nombre entier de 2 à 15.

8. Mélange de tensioactifs selon l'une quelconque des revendications 1 à 7, **caractérisé en ce qu'**il contient en outre des tensioactifs de formule

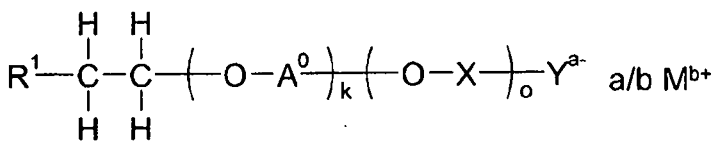 (II)

et de formule

$$R^2-\left(O-A^0\right)_k-\left(O-X\right)_o-Y^{a-} \quad a/b\ M^{b+} \qquad (III)$$

$R^1$, $R^2$, $A^0$, X, $Y^{a-}$, $M^{b+}$, k, o, a et b présentant la signification indiquée pour la formule (I).

**9.** Mélange de tensioactifs selon la revendication 8, **caractérisé en ce que** la proportion de tensioactifs de formule (I) par rapport à la somme des quantités de tensioactifs des formules (I), (II) et (III) se situe dans la plage de 80% en poids à 99% en poids.

**10.** Formulation aqueuse tensioactive contenant un mélange de tensioactifs selon l'une quelconque des revendications 1 à 9, la formulation tensioactive présentant de préférence une proportion totale de tensioactifs de 0,05 à 5% en poids par rapport à la quantité totale de la formulation aqueuse tensioactive.

**11.** Procédé pour le transport de pétrole, au moyen d'un fluxage par une microémulsion de Winsor de type III, dans lequel une formulation aqueuse tensioactive selon la revendication 10, en vue de la diminution de la tension interfaciale entre le pétrole et l'eau à < 0,1 mN/m, est injectée via au moins un trou d'injection dans un gisement de pétrole et du pétrole brut est prélevé du gisement par au moins un trou de production.

**12.** Procédé pour la préparation d'un mélange de tensioactifs selon l'une quelconque des revendications 1 à 9, comprenant les étapes consistant à :

(a) préparer des alcools de Guerbet de formule générale (IV) $(R^1)(R^2)$-CH-$CH_2OH$ (IV), $R^1$ et $R^2$ présentant la signification indiquée dans les revendications 1 à 9, par condensation d'un mélange d'au moins deux alcools primaires de formule R-$CH_2$-$CH_2$-OH, dans laquelle R représente un radical hydrocarboné aliphatique, linéaire ou ramifié, saturé ou insaturé, comprenant 8 à 10 atomes de carbone,
(b) alcoxyler les alcools obtenus dans l'étape de procédé (a),
(c) transformer les alcoxylates d'alcool obtenus dans l'étape (b) avec un groupe $Y^{a-}$, le cas échéant avec formation d'un groupe espaceur OX.

**13.** Utilisation d'un mélange de tensioactifs selon l'une quelconque des revendications 1 ou 9 ou d'une formulation tensioactive selon la revendication 10 lors du transport de pétrole au moyen d'un fluxage par microémulsion de Winsor de type III.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7119125 B1
- US 2008217064 A
- US 2009270281 A
- WO 2011037975 A2
- WO 2011110501 A1
- WO 2011110502 A1
- WO 2011110503 A1
- EP 2011055884 W
- EP 2011056325 W
- US 3119880 A
- US 35558716 B
- US 3979466 A
- US 3864407 A
- DE 3901095 A1
- DE 4325237 A1
- DE 10243361 A1
- WO 2006131541 A1


### In der Beschreibung aufgeführte Nicht-Patentliteratur


- *Journal of Petroleum Science of Engineering,* 1998, vol. 19, 265-280
- **C. MELROSE ; C.F. BRANDNER.** *J. Canadian Petr. Techn.,* Oktober 1974, 58
- **C. HUH.** *J. Coll. Interf. Sc.,* 1979, vol. 71 (2